Europäisches Patentamt

European Patent Office

Office européen des brevets

(19)

(11) Veröffentlichungsnummer : **0 161 329 B1**

(12) **EUROPÄISCHE PATENTSCHRIFT**

(45) Veröffentlichungstag der Patentschrift :
29.07.87

(51) Int. Cl.⁴ : **B 01 D 46/48**, B 01 D 46/02

(21) Anmeldenummer : **84105964.5**

(22) Anmeldetag : **25.05.84**

(54) Vorrichtung zum Ablösen von Staubschichten.

(30) Priorität : **13.04.84 DE 3413917**

(43) Veröffentlichungstag der Anmeldung :
**21.11.85 Patentblatt 85/47**

(45) Bekanntmachung des Hinweises auf die Patenterteilung : **29.07.87 Patentblatt 87/31**

(84) Benannte Vertragsstaaten :
**AT BE CH DE FR GB IT LI NL SE**

(56) Entgegenhaltungen :
**FR-A- 1 487 429**

(73) Patentinhaber : **Intensiv-Filter GmbH & Co KG**
**Vosskuhlstrasse 63**
**D-5620 Velbert 11 (DE)**

(72) Erfinder : **Kordas, Friedel**
**Landschützstrasse 20b**
**D-4350 Recklinghausen-Süd (DE)**

(74) Vertreter : **Geiersbach, Walter, Dipl.-Ing.**
**Wickrather Strasse 43**
**D-4000 Düsseldorf 11 (DE)**

EP 0 161 329 B1

## Beschreibung

Die Erfindung betrifft eine Vorrichtung zum Ablösen von Staubschichten an der Innenseite der Wände von zylindrischen und kegelförmigen Filtergehäusen durch Abblasen mit Druckgas bei Staubfiltern mit nach oben offenen Filterelementen, die mit ihrem offenen Ende an einem Trennboden zwischen Staubgas- und Reingasraum befestigt und auf einer kreisförmigen Fläche angeordnet sind, deren umhüllender Durchmesser kleiner ist als der Innendurchmesser des Filtergehäuses.

Filteranlagen dieser Art werden vorwiegend für die Filtrierung feiner Stäube benutzt. Diese Stäube entstehen z. B. bei der Herstellung von Produkten für die Nahrungsmittel- oder chemische Industrie. Wegen ihrer Feinheit haben diese Stäube eine für den Filtrierungsprozeß unangenehme Eigenschaft. Aufgrund der physikalisch bedingten Adhäsionskräfte haften sie an der Innenseite der Wände der Filtergehäuse. Die Schwerkraft allein reicht nicht aus, um diese Stäube von den Wänden zu lösen und den Staubaustragseinrichtungen zuzuführen.

Werden gegen das Haften der Stäube an den Innenseiten der Wände keine Maßnahmen ergriffen, so bilden sich Staubschichten, die bei Erreichen einer bestimmten Dicke zum Ausfall der Anlage führen. Weiterhin können dicke Staubschichten bei empfindlichen Produkten zur Alterung und damit zur Unbrauchbarkeit des Produktes beitragen. Außerdem sind größere Staubschichten wegen der daraus entstehenden Brand- und Explosionsgefahr unbedingt zu vermeiden.

Es sind Einrichtungen in geometrisch ähnlichen Behältern bekannt, die durch Kratzen oder Schaben in der Lage sind, derartige Staubschichten zu entfernen. Da dieser Vorgang größere Kräfte erfordert, sind aufwendige und viel Raum beanspruchende Konstruktionen notwendig. Bei Filteranlagen der beschriebenen Art ist so viel Raum nicht vorhanden, weil das gesamte Filtergehäuse für die Unterbringung der Filterschläuche und den Staubaustrag benötigt wird. Außerdem erreichen die Filtergehäuse bei üblichen Filteranlagen nicht selten eine Höhe von 6 bis 8 Metern. Es ist deshalb leicht einzusehen, daß wegen der daraus resultierenden Langen Hebelarme herkömmliche Ablösevorrichtungen nicht einsetzbar sind. Ein manuelles Ablösen der Staubschichten zum Reinigen der Innenseiten der Filtergehäusewände scheidet aus, weil der hierzu erforderliche Raum erst nach Ausbau sämtlicher Filterschläuche vorhanden wäre.

Der Erfindung liegt die Aufgabe zugrunde, eine Vorrichtung zum Ablösen von Staubschichten der eingangs beschriebenen Art so auszubilden, daß aufwendige und viel Raum einnehmende Bauformen vermieden werden.

Diese Aufgabe wird mit der Erfindung dadurch gelöst, daß in dem Zwischenraum zwischen den Filterelementen und der Innenseite der Gehäusewand ein Gestell um die Mittelachse des Filtergehäuses drehbar gelagert ist, das in axialer Richtung aus geraden und in Umfangsrichtung aus kreisförmig gebogenen Hohlprofilen, wie z. B. Rohren, zusammengesetzt ist, bei dem mindestens zwei der geraden Rohre an ihren unteren Enden mit mindestens einem parallel und im Abstand zu der kegelförmigen Gehäusewand verlaufenden bügelförmigen Rohr verbunden sind, wobei mindestens eines der in axialer Richtung des Filtergehäuses verlaufenden Rohre und mindestens ein Schenkel des bügelförmigen Rohres im Innern mit Druckgas durchströmt sind und mit düsenförmigen, zur Innenseite der Gehäusewände gerichteten Blasöffnungen für das Druckgas versehen sind.

Damit werden mehrere vorteilhafte Wirkungen erreicht. Das aus hohlen Längs- und Querprofilen, z. B. Rohren, zusammengesetzte Gestell bildet eine stabile Konstruktion, die sehr schmal gebaut und in dem engen Zwischenraum zwischen den Filterschläuchen und der Innenseite der Gehäusewand mühelos untergebracht werden kann. Derartige Bauweisen sind vom statischen Prinzip her aus dem Stahlleichtbau, dem Fachwerkbau und den sogenannten fliegenden Bauten unter dem Gesichtspunkt bekannt, daß sich nach dieser Methode erstellte Konstruktionen durch große Festigkeit bei geringen Abmessungen und demzufolge geringem Gewicht auszeichnen.

Eine weitere vorteilhafte Wirkung besteht darin, daß mit Hilfe der Ablösevorrichtung gemäß der Erfindung der kontinuierliche Betrieb einer Filteranlage ermöglicht wird, Alterungen im Produkt vermieden werden und die Brand- und Explosionsgefahr verhindert wird.

Ein weiteres wesentliches Merkmal der Erfindung besteht darin, daß das Gestell mittels einer Welle am Trennboden aufgehängt ist. Durch die hängende Anordnung sind Aufhängung und Lagerung in entgegengesetzter Richtung zum Staubaustrag angeordnet. Hierdurch wird ein für die Funktion der Filteranlage ungehinderter Staubaustrag ermöglicht und die Lagerung vor Staubeinwirkungen geschützt.

Es ist fast unmöglich, Filtergehäuse der beschriebenen Art völlig rund herzustellen. Dies wird dadurch ausgeglichen, daß das Gestell gelenkig aufgehängt ist. Dabei wird die konzentrische Lage des Gestells im Filtergehäuse dadurch eingehalten, daß es an seinem Umfang mit Führungsrollen versehen ist.

Um weiterhin einen ungestörten Staubaustrag zu ermöglichen, ist das Gestell mittels eines Antriebes drehbar, der in entgegengesetzter Richtung zum Staubaustrag angeordnet ist. Um weiterhin Platz zu sparen, ist die für die Aufhängung des Gestells ohnehin vorhandene Welle mit einem Hohlraum versehen, der als Druckspeicher ausgebildet ist.

Gemäß der Erfindung können die Staubschichten entweder dauernd oder periodisch durch Abblasen abgelöst werden. Für den letzteren Fall ist zwischen dem Hohlraum der Welle und den Blasrohren des Gestells ein die Druckgasströmung periodisch absperrendes und wieder freigebendes Ventil angeordnet.

Ein optimales Ablösen der Staubschichten von den Innenseiten der Gehäusewände wird dadurch erreicht, daß die Blasöffnungen in einem Winkel von etwa 20° zur Tangente an die Wände des Filtergehäuses angeordnet und gleichsinnig zur Drehrichtung des Gestells gerichtet sind. Durch diese Anordnung werden die durch den Blasvorgang unvermeidlichen Staubaufwirbelungen in geringstmöglichen Grenzen gehalten.

Weitere Einzelheiten, Merkmale und Vorteile des Gegenstandes der Erfindung ergeben sich aus der nachfolgenden Beschreibung der zugehörigen Zeichnung, in der ein bevorzugtes Ausführungsbeispiel einer erfindungsgemäß ausgebildeten Ablösevorrichtung schematisch dargestellt ist. In der Zeichnung zeigen :

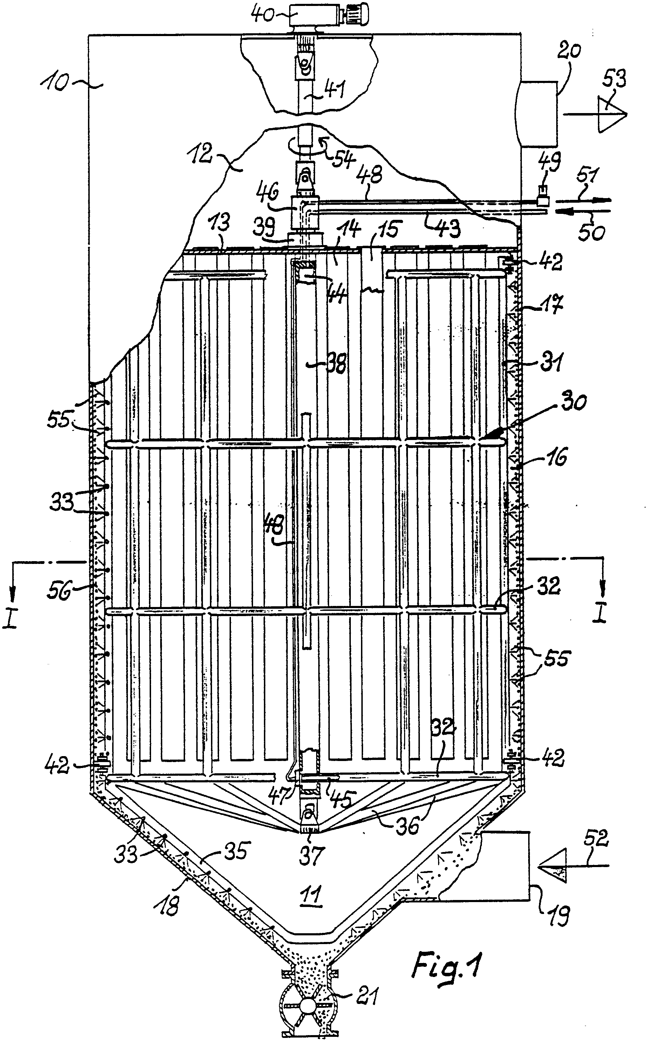

Figur 1 die Vorrichtung in Ansicht mit teilweise aufgebrochenem Filtergehäuse und aufgebrochenen Einzelheiten und

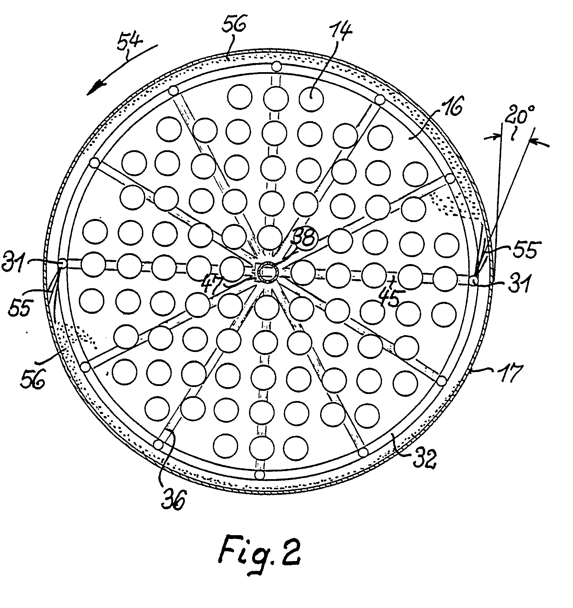

Figur 2 den Schnitt nach Linie I-I der Fig. 1.

In einem Filtergehäuse 10 mit einem Staubgasraum 11, einem Reingasraum 12 und einem Trennboden 13 zwischen Staubgas- und Reingasraum sind Filterschläuche 14 mit ihrem offenen Ende 15 in dem Trennboden 13 befestigt. In einem Zwischenraum 16 zwischen den Filterschläuchen 14 und der Wand 17 des Filtergehäuses 10 ist ein Gestell 30 drehbar angeordnet. Es besteht aus Hohlprofilen in Form von axial zur Längsachse des Filtergehäuses 10 angeordneten Rohren 31 und kreisförmig in Umfangsrichtung verlaufenden Rohren 32.

Eines oder mehrere der axial verlaufenden Rohre 31 des Gestells 30 sind zur Durchströmung von Druckgasen ausgebildet und mit düsenförmigen Blasöffnungen 33 versehen, die unter einem Winkel I von etwa 20° zur Tangente des Filtergehäuses 10 geneigt angeordnet sind. Die axial verlaufenden Blasrohre 31 sind an ihrem unteren Ende mit einem oder mehreren bügelförmigen Rohren 35 verbunden, die in unmittelbarem Abstand parallel zur kegelförmigen Gehäusewand 18 angeordnet sind. Sie sind in gleicher Weise mit Blasöffnungen 33 versehen wie die axial verlaufenden Rohre 31. Das Gestell 10 ist mittels radial verlaufender Speichen 36 an einem Gelenk 37 befestigt und mittels einer zentral angeordneten Welle 38 in einer gelenkig ausgebildeten Lagerung 39 am Trennboden 13 aufgehängt. Über einen Anstrieb 40 und eine Gelenkwelle 41 wird das Gestell 30 in Drehung versetzt. Die konzentrische Lage des rotierenden und gelenkig gelagerten Gestells 30 innerhalb des Filtergehäuses 10 wird durch seitlich angebrachte Führungsrollen 42 eingehalten.

Die Welle 38 ist hohl ausgebildet und an ihrem oberen Ende über eine Druckgasleitung 43 mit einem Druckgasvorrat verbunden. Dadurch bildet die Welle 38 einen Druckgasspeicher 44, der an seinem unteren Ende über eine Verbindungsleitung 45 mit den Blasrohren 31 und 35 verbunden ist.

Das für den Ablösevorgang erforderliche Druckgas 50 wird dem Druckgasspeicher 44 über die Druckgasleitung 43 und eine Drehdurchführung 46 zugeführt. Eine Drehdurchführung ist eine abgedichtete und mit mindestens einem Ringkanal versehene Muffe. Durch ein periodisch arbeitendes Schaltventil 47 wird das Druckgas 50 über die Verbindungsleitung 45 und die Blasrohre 31, 35 zu den Blasöffnungen geleitet. Ein als Steuergas 51 für das Schaltventil 47 benutzter Anteil des Druckgases 50 wird über eine Steuerleitung 48, einen zweiten Ringkanal in der Drehdurchführung 46 und ein Steuerventil 49 an die umgebende Luft abgeführt.

Das Staubgas 52 wird durch eine Einlaßöffnung 19 in das Filtergehäuse 10 eingeleitet. Das Reingas 53 wird durch eine Auslaßöffnung 20 abgeführt. Das Gestell 30 wird in Drehrichtung 54 gleichsinnig zu den Blasstrahlen 55 gedreht. Durch den Impuls der auf die Innenseite der Gehäusewand 17 auftreffenden Blasstrahlen 55 werden die an der Innenseite der Gehäusewand 17 anhaftenden Staubschichten 56 abgelöst und einem Staubaustrag 21 zugeführt.

## Patentansprüche

1. Vorrichtung zum Ablösen von Staubschichten (56) an der Innenseite der Wände (17) von zylindrischen und kegelförmigen Filtergehäusen (10, 18) durch Abblasen mit Druckgas (50) oder Druckgasgemisch bei Staubfiltern mit nach oben offenen Filterelementen (14), die mit ihrem offenen Ende (15) an einem Trennboden (13) zwischen Staubgas- und Reingasraum (11, 12) befestigt und auf einer kreisförmigen Fläche angeordnet sind, deren umhüllender Durchmesser kleiner ist als der Innendurchmesser des Filtergehäuses (10), dadurch gekennzeichnet, daß in dem Zwischenraum (16) zwischen den Filterelementen (14) und der Innenseite der Gehäusewand (17) ein Gestell (30) um die Mittelachse des Filtergehäuses (10) drehbar gelagert ist, das in axialer Richtung aus geraden und in Umfangsrichtung aus kreisförmig gebogenen Hohlprofilen, wie z. B. Rohren (31, 32) zusammengesetzt ist, bei dem mindestens zwei der geraden Rohre (31) an ihren unteren Enden mit mindestens einem parallel und im Abstand zu der kegelförmigen Gehäusewand (18) verlaufenden, bügelförmigen Rohr (35) verbunden sind, wobei mindestens eines der in axialer Richtung des Filtergehäuses (10) verlaufenden Rohre (31) und mindestens ein Schenkel des bügelförmigen Rohres (35) im Innern mit Druckgas (50) durchströmt sind und mit düsenförmigen, zur Innenseite der Gehäusewände (17, 18) gerichteten Blasöffnungen (33) für das Druckgas (50) versehen sind.

2. Vorrichtung nach Anspruch 1, dadurch gekennzeichnet, daß das Gestell (30) mittels einer Welle (38) am Trennboden (13) aufgehängt ist.

3. Vorrichtung nach Anspruch 1 oder 2, dadurch gekennzeichnet, daß das Gestell (30) gelenkig aufgehängt ist.

4. Vorrichtung nach Anspruch 1, 2 oder 3, dadurch gekennzeichnet, daß das Gestell (30) mittels eines Antriebes (40) drehbar ist, der in entgegengesetzter Richtung zum Staubaustrag (21) angeordnet ist.

5. Vorrichtung nach mindestens einem der Ansprüche 1 bis 4, dadurch gekennzeichnet, daß das Gestell (30) an seinem Umfang mit Führungsrollen (42) versehen ist.

6. Vorrichtung nach mindestens einem der Ansprüche 1 bis 5, dadurch gekennzeichnet, daß die Welle (38) mit einem Hohlraum (44) versehen ist, der als Druckgasspeicher ausgebildet ist.

7. Vorrichtung nach mindestens einem der Ansprüche 1 bis 6, dadurch gekennzeichnet, daß zwischen dem Hohlraum (44) der Welle (38) und den Blasrohren (31, 35) des Gestells (30) ein die Druckgasströmung periodisch absperrendes und wieder freigebendes Ventil (47) angeordnet ist.

8. Vorrichtung nach mindestens einem der Ansprüche 1 bis 7, dadurch gekennzeichnet, daß die Blasöffnungen (33) in einem Winkel von etwa 20° zur Tangente an die Wände (17, 18) des Filtergehäuses (10) angeordnet und gleichsinnig zur Drehrichtung des Gestells (30) gerichtet sind.

**Claims**

1. Apparatus for dissolving layers of dust (56) on the inside of the walls (17) of cylindrical and conical filter housings (10, 18) by blasting with compressed gas (50) or compressed gas mixture in the case of dust filters with filter elements (14) which are open at the top, are secured with their open end (15) to a separating base (13) between the dust gas and the clean gas chamber and disposed on a circular surface, the encompassing diameter of which is smaller than the inner diameter of the filter housing (10), characterised in that a mounting frame (30) is rotatably mounted about the middle axis of the filter housing (10) between the filter elements (14) and the inside of the housing wall (17), the mounting frame (30) being composed in the axial direction of straight and in the circumferential direction of conically bowed hollow profiles, such as tubes (31, 32) for example, whereby at least two of the straight tubes (31) are connected to their lower ends with at least one bow-shaped tube (35) parallel to and at a distance from the conical housing wall (18), at least one of the tubes (31) which extend in the axial direction of the filter housing (10) and at least one leg of the bow-shaped tube (35) being passed through by compressed gas (50) and being provided with nozzle-shaped blowing apertures (33) for the compressed gas (50) directed towards the inside of the housing walls (17, 18).

2. Apparatus according to claim 1, characterised in that the mounting frame (30) is suspended on the separating base (13) by means of a shaft (38).

3. Apparatus according to claim 1 or 2, characterised in that the mounting frame (30) is flexibly suspended.

4. Apparatus according to claim 1, 2 or 3, characterised in that the mounting frame (30) is rotatable by means of a drive (40) disposed in the opposite direction to the dust extractor (21).

5. Apparatus according to any of claims 1 to 4, characterised in that the mounting frame (30) is provided with guide pulleys (42) on its periphery.

6. Apparatus according to any of claims 1 to 5, characterised in that the shaft (38) is provided with a cavity (44) which is formed as a compressed gas reservoir.

7. Apparatus according to any of claims 1 to 6, characterised in that a valve (47) which periodically shuts off and releases the flow of compressed gas is disposed between the cavity (44) of the shaft (38) and the blowing tubes (31, 35) of the mounting frame (30).

8. Apparatus according to any of claims 1 to 7, characterised in that the blowing apertures (33) are disposed at a tangent to the walls (17, 18) at an angle of about 20° and are directed in the same direction as the rotational direction of the mounting frame (30).

**Revendications**

1. Dispositif pour enlever des couches de poussière (56) du côté intérieur des parois (17) d'enveloppes de filtres cylindriques ou coniques (10, 18) par soufflage de gaz sous pression (50) ou d'un mélange de gaz sous pression dans des filtres à poussière comportant des éléments de filtre (14) ouverts vers le haut qui sont fixés par leur extrémité supérieure ouverte (15) à un plancher de séparation (13) entre l'enceinte contenant le gaz chargé de poussière et l'enceinte contenant le gaz purifié (11, 12) et sont placés sur une surface circulaire dont le diamètre extérieur est plus petit que le diamètre intérieur de l'enveloppe (10) du filtre, caractérisé en ce que l'espace intermédiaire (16) compris entre les éléments de filtre (14) et le côté intérieur de la paroi (17) de l'enveloppe contient un bâti (30) qui est monté sur palier de manière à pouvoir tourner autour de l'axe médian de l'enveloppe (10) du filtre et est constitué par des profils creux, par exemple des tubes (31, 32) qui sont rectilignes dans le sens axial et incurvés suivant une circonférence dans le sens périphérique et dans lequel deux au moins des tubes rectilignes (31) sont reliés par leurs extrémités inférieures à au moins un tube (35) en forme d'étrier parallèle à la paroi conique (18) de l'enveloppe et situé à une certaine distance d'elle, l'un au moins des tubes (31) orientés dans le sens de l'axe de l'enveloppe (10) du filtre et l'une au moins des branches du tube (35) en forme d'étrier étant parcourus à l'intérieur par du gaz sous pression (50) et comportant des orifices (33) de soufflage du gaz sous pression (50) ayant la forme de buses et orientées vers le côté intérieur des parois (17, 18) de l'enveloppe.

2. Dispositif selon la revendication 1, caractérisé en ce que le bâti (30) est suspendu au plancher de séparation (13) au moyen d'un arbre (38).

3. Dispositif selon l'une des revendications 1 ou 2, caractérisé en ce que le bâti (30) est suspendu par une articulation.

4. Dispositif selon l'une des revendications 1, 2 ou 3, caractérisé en ce que le bâti (30) peut tourner sous l'action d'un dispositif d'entraînement (40) qui est placé dans la direction opposée au dispositif (21) d'évacuation de la poussière.

5. Dispositif selon l'une au moins des revendications 1 à 4, caractérisé en ce que le bâti (30) est muni de galets de guidage (42) à sa périphérie.

6. Dispositif selon l'une au moins des revendications 1 à 5, caractérisé en ce que l'arbre (38) comporte une cavité (44) qui constitue un réservoir de gaz sous pression.

7. Dispositif selon l'une au moins des revendications 1 à 6, caractérisé en ce qu'entre la cavité (44) de l'arbre (38) et les tubes de soufflage (31, 35) du bâti (30) est disposée une soupape (47) qui ferme et rouvre périodiquement le passage pour le gaz sous pression.

8. Dispositif selon l'une au moins des revendications 1 à 7, caractérisé en ce que les orifices de soufflage (33) font un angle de 20° environ avec la tangente aux parois (17, 18) de l'enveloppe (10) du filtre et sont orientés dans le sens de la rotation du bâti (30).

Fig.1

Fig. 2